(19) Europäisches Patentamt / European Patent Office / Office européen des brevets

(11) **EP 4 310 207 A1**

(12) **EUROPEAN PATENT APPLICATION**
published in accordance with Art. 153(4) EPC

(43) Date of publication:
**24.01.2024 Bulletin 2024/04**

(21) Application number: **22798809.4**

(22) Date of filing: **08.02.2022**

(51) International Patent Classification (IPC):
**C21D 9/56** (2006.01)     **C21D 1/74** (2006.01)
**C21D 1/76** (2006.01)

(52) Cooperative Patent Classification (CPC):
**C21D 1/74; C21D 1/76; C21D 9/56;** Y02P 10/20

(86) International application number:
**PCT/JP2022/004973**

(87) International publication number:
**WO 2022/234701 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.05.2021   JP 2021078773**

(71) Applicant: **JFE Steel Corporation
Tokyo 100-0011 (JP)**

(72) Inventors:
• **TAKEDA, Gentaro
Tokyo 100-0011 (JP)**
• **TAKAHASHI, Hideyuki
Tokyo 100-0011 (JP)**
• **TAKEDA, Yuki
Tokyo 100-0011 (JP)**

(74) Representative: **Grünecker Patent- und
Rechtsanwälte
PartG mbB
Leopoldstraße 4
80802 München (DE)**

(54) **METHOD FOR CONTROLLING DEW POINT OF CONTINUOUS ANNEALING FURNACE, CONTINUOUS ANNEALING METHOD FOR STEEL SHEETS, METHOD FOR PRODUCING STEEL SHEET, CONTINUOUS ANNEALING FURNACE, CONTINUOUS HOT DIP GALVANIZATION FACILITY AND ALLOYED HOT DIP GALVANIZATION FACILITY**

(57)    Provided are a dew point control method for a continuous annealing furnace, a continuous annealing method for a steel sheet, a steel sheet manufacturing method, a continuous annealing furnace, a continuous hot-dip galvanizing line, and a galvannealing line by which a furnace dew point can be controlled in a short time. The dew point control method includes stopping or reducing supply of humidified gas into the furnace, and supplying dry gas along a furnace inner wall of the continuous annealing furnace in the continuous annealing furnace. According to the dew point control method, a temperature of the furnace inner wall of the continuous annealing furnace may be at least 30 °C higher than a furnace atmosphere temperature in the continuous annealing furnace.

*FIG. 2*

**Description**

TECHNICAL FIELD

The present disclosure relates to a dew point control method for a continuous annealing furnace, a continuous annealing method for a steel sheet, a steel sheet manufacturing method, a continuous annealing furnace, a continuous hot-dip galvanizing line, and a galvannealing line.

BACKGROUND

In recent years, demand for high-tensile-strength steel sheets (high-tensile steel sheets) that contribute to weight reduction or the like of structures has been increasing in the fields of automobiles, home appliances, construction materials, or the like. Known examples of high-tensile steel sheets include those made of steel containing Si, so that hole expansion formability are improved, and those made of steel containing Si and Al, so that formation of retained austenite ($\gamma$) is facilitated and therefore good ductility is provided.

Now, when a hot-dip galvanized steel sheet and a galvannealed steel sheet are manufactured using a high-tensile-strength steel sheet containing a large amount of Si as base metal, the following problems occur. The hot-dip galvanized steel sheet and the galvannealed steel sheet are annealed with heat in a non-oxidizing or a reducing atmosphere at a temperature of approximately 600 °C to 900 °C, and subsequently subjected to hot-dip galvanizing treatment. The Si contained in the steel is a readily oxidizable element, and it is selectively oxidized in the commonly used non-oxidizing or reducing atmosphere, and concentrated to form oxides on the surface. The oxides decrease the wettability with molten zinc during the coating treatment, thus causing non-coating. Accordingly, as the Si concentration in the steel increases, the wettability decreases, and as a result, non-coating can occur more frequently. Even when non-coating does not occur, the problem of poor coating adhesion properties can occur. Furthermore, when the Si contained in the steel is selectively oxidized and concentrated on the surface, alloying may be delayed during the alloying process performed after hot-dip galvanizing. This can lead to lower productivity. In a case in which alloying treatment is performed at an excessively high temperature in order to ensure productivity, it may cause deterioration of powdering resistance. It is therefore difficult to achieve both high productivity and good powdering resistance.

In the case of an ultrahigh-tensile-strength steel sheet having a tensile strength of more than 980 MPa, it is necessary to solve problems of not only formability but also hydrogen embrittlement cracking of the steel sheet. The hydrogen embrittlement cracking is a phenomenon in which a steel member, to which a high stress is applied in use, suddenly fractures due to hydrogen infiltrating into the steel from the environment. This phenomenon of fracture is also called delayed fracture because of the form of occurrence. It is generally known that hydrogen embrittlement cracking of a steel sheet is more likely to occur as the tensile strength of the steel sheet increases. It is considered that this is because the higher the tensile strength of the steel sheet, the greater the residual stress in the steel sheet after forming a component. In the case of steel sheets for vehicles, the hydrogen embrittlement cracking is particularly likely to occur in bent portions to which large plastic strains are applied. Therefore, there is a demand to improve not only the formability, such as ductility, bendability, and hole expansion formability, but also hydrogen embrittlement resistance of the bent portions.

To address these problems, Patent Literature (PTL) 1 describes a galvanized steel sheet manufacturing method that includes passing a cold-rolled steel sheet having a predetermined chemical composition through an annealing furnace twice, and subsequently subjecting the steel sheet to continuous hot-dip coating treatment. According to the technology of PLT 1, in the second heat treatment (annealing), a furnace atmosphere is adjusted so that when the $H_2$ concentration is 2 % to 5 %, a partial pressure of water vapor satisfies $-1.1 \leq \log (PH_2O/PH_2) \leq -0.07$, which is generally -17 °C to +30 °C when being converted to dew point, in order to form an appropriate decarburized layer on a surface layer of the steel sheet.

CITATION LIST

Patent Literatures

PTL 1: WO 2019/187060 A1
PTL 2: JP 2012-111995 A
PTL 3: JP 2016-125131 A

SUMMARY

(Technical Problem)

The range of dew point converted in PTL 1 is as described above, but once the furnace dew point is raised above 0 °C, it is usually very difficult to lower the furnace dew point. In a case in which a high-tensile steel sheet with a lower Si content than the high-tensile steel sheet targeted by PTL 1 is passed through the furnace while the furnace dew point remains high, it will undergo severe surface oxidation, and roll pickup occurs noticeably.

Patent Literature (PTL) 2 discloses a method of efficiently lowering a furnace dew point, by taking out part of furnace gas, dehumidifying it using a refiner and raising the gas temperature to 400 °C to 600 °C, and subsequently supplying the gas into the furnace. Patent Literature (PTL) 3 discloses a method of controlling a dew point in at least an uppermost portion of a furnace to 0 °C or less, by discharging atmosphere gas from the vicinity of a hearth roll and supplying dry gas to the vicinity of the hearth roll.

However, it has been found that even when the furnace gas is replaced by combining the methods of PTL 2 and PTL 3, it actually takes time to lower the dew point, because moisture contained in a furnace wall and a furnace heat insulation material is supplied into the furnace in the process of lowering the dew point. With the conventional technology, it takes 12 hours or more, in an example, to lower the dew point to an appropriate dew point (e.g., -20 °C or less) for high-tensile steel sheets with a low Si content, resulting in a significant decrease in productivity.

It would be helpful to provide a dew point control method for a continuous annealing furnace, a continuous annealing method for a steel sheet, a steel sheet manufacturing method, a continuous annealing furnace, a continuous hot-dip galvanizing line, and a galvannealing line by which a furnace dew point can be controlled in a short time.

(Solution to Problem)

A dew point control method for a continuous annealing furnace according to an embodiment of the present disclosure includes stopping or reducing supply of humidified gas into the furnace, and supplying dry gas along a furnace inner wall of the continuous annealing furnace in the continuous annealing furnace.

In the above dew point control method, a temperature of the furnace inner wall of the continuous annealing furnace may be at least 30 °C higher than a furnace atmosphere temperature in the continuous annealing furnace. Furthermore, in the above dew point control method, a furnace dew point may be changed from a dew point of 5 °C or more to a dew point of less than 0 °C. Moreover, in the dew point control method, an angle formed between the dry gas injected from inside the furnace toward the furnace inner wall and the furnace inner wall in the continuous annealing furnace may be 5° or more. The angle may be 45° or less. A jet velocity of the dry gas impinging on the furnace inner wall may be controlled to be 0.8 m/s or more.

A continuous annealing method for a steel sheet according to an embodiment of the present disclosure includes controlling a furnace dew point using the above dew point control method.

A steel sheet manufacturing method according to an embodiment of the present disclosure includes manufacturing a high-tensile-strength steel sheet, a hot-dip galvanized steel sheet, or a galvannealed steel sheet using the above continuous annealing method.

A continuous annealing furnace according to an embodiment of the present disclosure includes a nozzle configured to supply gas along a furnace inner wall, wherein the gas supplied from the nozzle includes dry gas.

In the above continuous annealing furnace, the nozzle configured to inject the gas may be provided on a furnace top wall and/or a furnace side wall in the furnace, and an angle formed between the gas injected from the nozzle toward the furnace inner wall and the furnace inner wall may be 5° or more. The angle may be 45° or less. Furthermore, the above continuous annealing furnace may include a heating mechanism configured to heat the furnace inner wall to a temperature at least 30 °C higher than a furnace atmosphere temperature.

A continuous hot-dip galvanizing line according to an embodiment of the present disclosure includes: the above continuous annealing furnace; and a coating apparatus that follows the continuous annealing furnace.

A galvannealing line according to an embodiment of the present disclosure includes: the above continuous annealing furnace; a coating apparatus that follows the continuous annealing furnace; and an alloying furnace.

(Advantageous Effect)

According to the present disclosure, the dew point control method for a continuous annealing furnace, the continuous annealing method for a steel sheet, the steel sheet manufacturing method, the continuous annealing furnace, the continuous hot-dip galvanizing line, and the galvannealing line by which the furnace dew point can be controlled in a short time can be provided.

## BRIEF DESCRIPTION OF THE DRAWINGS

In the accompanying drawings:

FIG. 1 illustrates an example configuration of a continuous hot-dip galvanizing line that includes a continuous annealing furnace and a coating apparatus;
FIG. 2 illustrates an example of a furnace gas supply route in a reducing furnace;
FIG. 3 illustrates a conventional dry gas supply nozzle;
FIG. 4 illustrates an example of a nozzle that supplies dry gas along a furnace inner wall in the present embodiment;
FIG. 5 illustrates examples of devices that heat and control an inner wall surface of the reducing furnace; and
FIG. 6 illustrates an example of changes in dew point for an Example and a Comparative Example.

## DETAILED DESCRIPTION

Hereinafter, a dew point control method for a continuous annealing furnace, a continuous annealing method for a steel sheet, a steel sheet manufacturing method, a continuous annealing furnace, a continuous hot-dip galvanizing line, and a galvannealing line according to an embodiment of the present disclosure will be described with reference to the drawings. Here, the steel sheet can be a high-tensile-strength steel sheet, a hot-dip galvanized steel sheet, or a galvannealed steel sheet, without being limited to a particular kind.

The continuous hot-dip galvanizing line is configured, for example, with a continuous annealing furnace and a coating apparatus that follows the continuous annealing furnace. The galvannealing line is configured, for example, with a continuous annealing furnace, a coating apparatus that follows the continuous annealing furnace, and an alloying furnace. In the following, the continuous hot-dip galvanizing line and the galvannealing line may collectively be referred to as hot-dip galvanizing lines.

The continuous annealing furnace of the hot-dip galvanizing line is configured to include a heating furnace (heating zone) that heats up a steel sheet, and a soaking furnace (soaking zone) that makes the temperature of the heated steel sheet uniform. The continuous annealing furnace may be a furnace that has a mechanism for heating up and soaking the steel sheet, that allows the steel sheet to travel or move inside the furnace, and that allows the atmosphere to be controlled, without being limited to a particular line or type. The type of heating furnace can be, for example, a direct-fired furnace (DFF) or a non-oxidizing furnace (NOF). Furthermore, the type of soaking furnace can be a radiant tube furnace (RTF). Moreover, the continuous annealing surface can be an all radiant tube-type continuous annealing surface with radiant (radiation) tubes provided all the way from the heating furnace to the soaking furnace.

The dew point control method for a continuous annealing furnace according to the present embodiment is used in a continuous hot-dip galvanizing line or a galvannealing line that includes the continuous annealing furnace provided with a DFF-type heating furnace and an RTF-type soaking furnace, or with an NOF-type heating furnace and an RTF-type soaking furnace, and it has a more advantageous effect than conventional technology. Furthermore, the dew point control method for a continuous annealing furnace according to the present embodiment is used in a continuous hot-dip galvanizing line or a galvannealing line that includes an all radiant tube-type continuous annealing furnace, and it has a more advantageous effect than conventional technology.

Here, a reducing furnace herein refers to a furnace portion provided with radiant tubes. For example, in a continuous annealing furnace that includes a DFF-type heating furnace and an RTF-type soaking furnace, and in a continuous annealing surface that includes an NOF-type heating furnace and an RTF-type soaking furnace, the reducing furnace refers to the soaking furnace. Furthermore, in an all radiant tube-type continuous annealing furnace, the reducing furnace refers to the heating furnace and the soaking furnace.

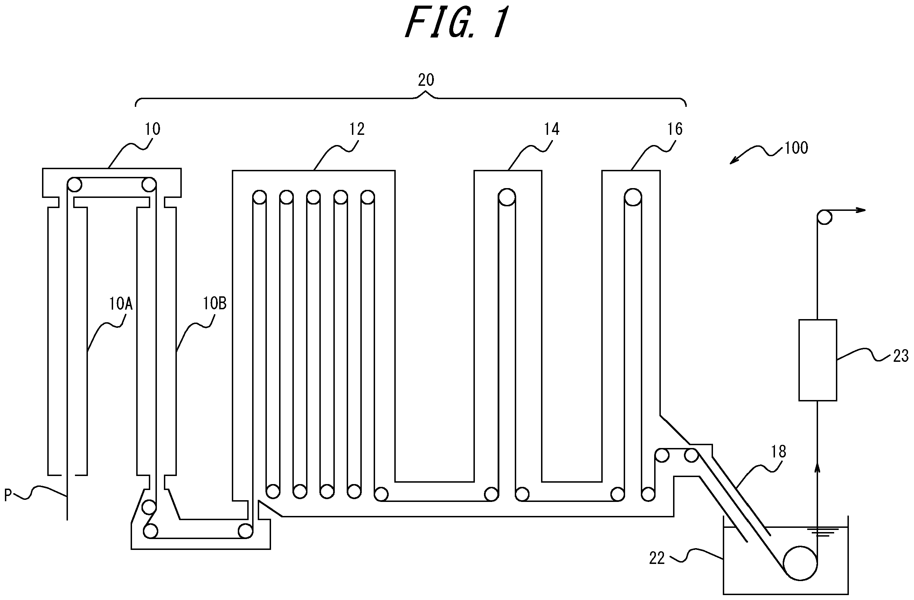

FIG. 1 illustrates an example configuration of a continuous hot-dip galvanizing line 100 that includes a continuous annealing furnace 20 and a coating apparatus 22. The continuous annealing furnace 20 is configured with a heating zone 10, a soaking zone 12, a rapid cooling zone 14, and a slow cooling zone 16. The rapid cooling zone 14 and the slow cooling zone 16 may collectively be referred to as cooling zones. The heating zone 10 is configured by a preheating zone 10A and a direct-fired furnace (DFF) 10B. The soaking zone 12 is a radiant tube furnace (RTF), which is hereinafter also referred to as a reducing furnace. In FIG. 1, a steel sheet P, a snout 18, and the coating apparatus 22 are illustrated. The snout 18 is a tool for immersing the steel sheet P into the molten bath. As illustrated in FIG. 1, the continuous hot-dip galvanizing line 100 may further include an alloying furnace 23, so as to be configured as a galvannealing line.

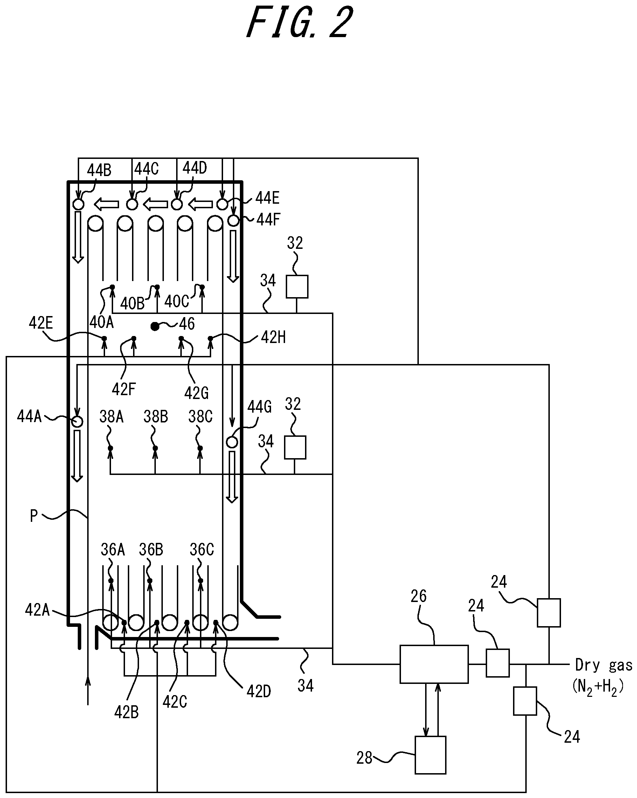

FIG. 2 illustrates an example of a furnace gas supply route in the reducing furnace. As illustrated in FIG. 2, the reducing furnace includes a humidifying device 26, a constant-temperature circulating water bath 28, a gas distribution device 24, a feed gas dew point meter 32, humidified gas feed ports 36A-36C, 38A-38C, 40A-40C, ordinary dry gas feed ports 42A-42H, supply nozzles 44A-44G, and a furnace dew point collection point 46. Here, the furnace dew point refers to the dew point of furnace atmosphere gas in the continuous annealing furnace. The supply nozzles 44A-44G are nozzles for supplying dry gas along a furnace inner wall when the furnace dew point is lowered. The furnace inner furnace wall refers to a furnace wall on an inner side of the furnace.

Typically, dry $N_2$ or mixed gas of $N_2$ and $H_2$ (hereinafter, may be referred to as "$N_2 + H_2$") with a dew point of -60 °C to -40 °C is constantly supplied to the reducing furnace from the dry gas feed ports 42A-42H. In the present embodiment, part of the supplied gas is humidified by the humidifying device 26 and then supplied into the furnace. The humidifying device 26 includes a humidifying module having a fluorinated or polyimide hollow fiber membrane, a flat membrane, or the like. In the humidifying device 26, dry gas flows inside the membrane, whereas pure water that has been adjusted to a predetermined temperature in the constant-temperature circulating water bath 28 circulates outside the membrane. The hollow fiber membrane or the flat membrane is a type of ion exchange membrane with affinity for water molecules. When a difference in moisture concentration occurs between the inside and the outside of the membrane, a force is generated to equalize the difference in concentration, and the water uses this force as a driving force to move through the membrane to the lower moisture concentration. The temperature of dry gas before humidification varies with seasonal or daily air temperature changes. The humidifying device 26 also exchanges heat by increasing the contact area between the gas and water through the water vapor permeable membrane, so that regardless of whether the temperature of dry gas before humidification is higher or lower than the circulating water temperature, the dry gas is humidified to the same dew point as the set water temperature, thus allowing for highly accurate dew point control. The temperature of the gas humidified by the humidifying device 26 (hereinafter, referred to as the "humidified gas") can be controlled to any value in the range of 5 °C to 50 °C.

As illustrated in FIG. 2, the humidified gas is supplied directly into the continuous annealing furnace. The atmosphere in the reducing furnace is controlled throughout the furnace by a measurement device and a process computer. The measurement device and the process computer also measure the dew point as appropriate and control it by outputting the results to a control system of the humidifying device. When the furnace dew point is below the target range, the humidifying device 26 supplies gas with a higher dew point, by raising the circulating water temperature. When the furnace dew point is above the target range, the humidifying device 26 supplies gas with a lower dew point, by lowering the circulating water temperature. In the present embodiment, apart from the supply of humidified gas from the nozzles 42A-42H, dry gas is supplied (dry gas is supplied along a furnace wall) from the nozzles 44A-44G. The humidified gas may be stopped at the same time as the supply of dry gas along the furnace wall is started, or the dry gas can be supplied along the furnace wall after a certain time interval after the humidified gas is stopped. It is also possible to increase the supply of dry gas along the furnace wall, while reducing the supply of humidified gas. Here, the supply of humidified gas does not need to be completely stopped to 0 $Nm^3$/hr, and the advantageous effect of controlling the furnace dew point in a short time can be achieved, by reducing the flow rate to less than 1/2, more preferably less than 1/3, of the dry gas supply.

The step (reduction annealing step) performed in the reducing furnace reduces iron oxides formed on a surface of the steel sheet during an oxidation treatment step performed in the heating zone 10. At this time, due to oxygen supplied from the iron oxides, alloying elements, such as Si or Mn, form as internal oxides in the steel sheet. As a result, a reduced iron layer reduced from the iron oxides forms on the outermost surface of the steel sheet, while Si, Mn, or the like remain inside the steel sheet as internal oxides. This prevents oxidation of Si, Mn, or the like on the surface of the steel sheet, and therefore prevents a decrease in the wettability between the steel sheet and hot-dip coating. Thus, good coating adhesion properties can be obtained. In the case of a steel type with a low Si content (e.g., 0.5 % or less), a furnace dew point of -30 °C or less is appropriate, whereas in the case of a steel type with a higher Si content, the furnace dew point is preferably adjusted to approximately -15 °C to -5 °C, so as to achieve the aforementioned coatability improving effect.

A higher-strength steel sheet (with a tensile strength of 980 MPa or more) has a problem associated with hydrogen embrittlement resistance in a portion subjected to bending, and the bending properties can be remarkably improved, by providing a decarburized layer with a thickness of approximately 50 $\mu$m on a surface layer of the steel sheet after annealing. The present inventors have found that the bending properties can be remarkably improved, by adjusting the furnace dew point to +5 °C to +20 °C, preferably +10 °C to +15 °C.

On the other hand, a dew point of +5 °C to +20 °C is appropriate for some steel types, and therefore, a line that can quickly control the furnace dew point is needed in actual operation. When the dew point is raised, the dew point can be adjusted to a desired dew point in a few minutes, by feeding an appropriate amount of humidified gas using the method described above. However, when the dew point is lowered, it takes time to release moisture from the furnace wall and the heat insulation material, by simply replacing the furnace gas. Furthermore, in a case in which a steel sheet with a low Si content is passed through the furnace without the furnace dew point falling sufficiently, surface defects, such as non-coating and pick-up, may occur. It is particularly difficult to change the furnace dew point from a dew point of +5 °C or more to a dew point of less than 0 °C (e.g., lowering the furnace dew point from +10 °C to -5 °C) using conventional technology. As described above, it is necessary not only to switch between different types of gas but also to remove moisture in the furnace. There is therefore a need for technology that can efficiently lower the dew point, including lowering the dew point from +5 °C or more to less than 0 °C.

The hot-dip galvanizing line that includes the continuous annealing furnace according to the present embodiment implements the dew point control method that includes stopping or reducing supply of humidified gas, which is responsible for raising the dew point, into the furnace, and supplying dry gas along a furnace inner wall of the continuous annealing furnace, as will be described below. This method can promote the release of moisture from the furnace wall.

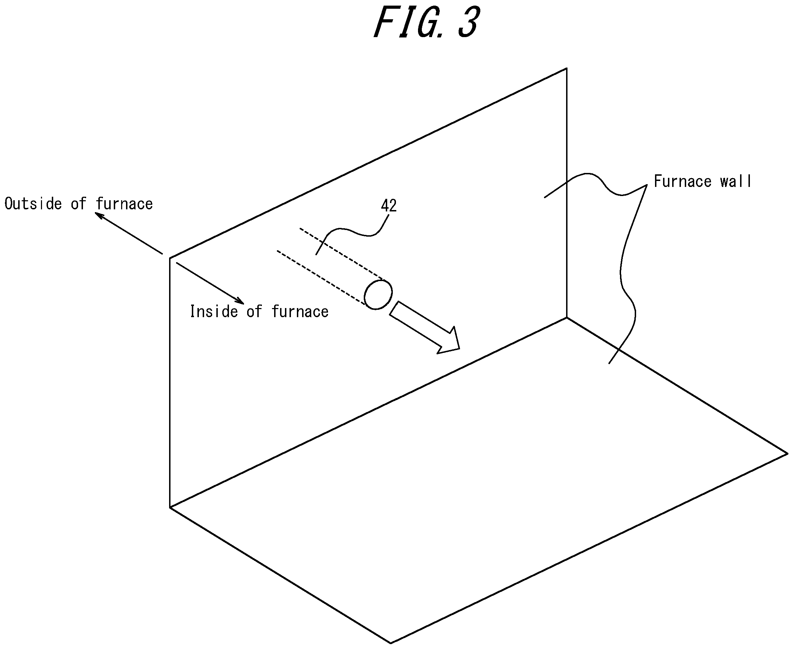

FIG. 3 illustrates a conventional dry gas supply method for a reducing furnace. Conventionally, dry gas is supplied into the furnace through gas pipes provided perpendicularly with respect to a furnace wall. For example, a pipe with a 25A to 50A size is used as an ordinary gas supply port 42. For example, because there are approximately 3 to 20 feed ports, and the total gas flow rate is approximately 300 Nm$^3$/hr to 1000 Nm$^3$/hr, the ejection velocity into the furnace is approximately 2 m/s to 50 m/s. According to the conventional dry gas supply method for the reducing furnace, because the dry gas immediately mixes with gas inside the furnace, the dew point in the vicinity of a furnace inner wall cannot be lowered efficiently. The dew point in the vicinity of the furnace inner wall does not lower even when the dew point in the middle of the furnace lowers, and moisture is released from the furnace wall only little by little.

The present inventors have conducted earnest studies and found that by actively lowering the dew point in the vicinity of the furnace inner wall and creating a difference in moisture concentration, moisture contained in the furnace wall and the furnace heat insulation material can be efficiently released into the dry gas flowing along the furnace inner wall.

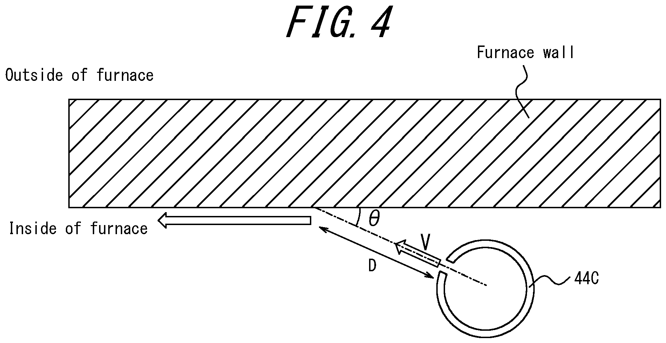

FIG. 4 illustrates an example of a nozzle (e.g., supply nozzle 44C) in the reducing furnace of the hot-dip galvanizing line that includes the continuous annealing furnace according to the present embodiment. The continuous annealing furnace according to the present embodiment includes nozzles that can supply gas along the furnace inner wall. The gas supplied from the nozzle also includes dry gas. That is, in the present embodiment, the nozzles can supply dry gas along the furnace inner wall. Each nozzle is preferably a slit nozzle as illustrated in FIG. 4, although it is not limited to a particular kind or shape. In another example, each nozzle may be shaped like a wiping nozzle.

The slit nozzle of FIG. 4 has a slit width of 2 mm to 10 mm toward the furnace inner wall, for example, in part of a circular tube extending in a width direction of the steel sheet, and the slit length (effective length of gas injection) of the slit nozzle substantially equals the maximum width of the steel sheet to be passed through. The slit injects dry gas toward the furnace inner wall with an injection angle θ inclined with respect to the furnace inner wall. The injection angle θ is, for example, in the range of 5° to 45°. In other words, the angle formed between the gas injected toward the furnace inner wall from the slit nozzle and the furnace inner wall is 5° or more. The angle is 45° or less. By setting the injection angle θ in this range, the jet is less likely to separate from the furnace inner wall, and the dry gas can be supplied along the wall surface.

The gas injection velocity may be adjusted to approximately 2 m/s to 20 m/s. Here, when the nozzle slit width is B [mm], the distance between a nozzle injection opening and the furnace inner wall that considers the injection angle (refer to FIG. 4) is D [mm], and the injection velocity is V [m/s], Vs [m/s], which is impinging jet velocity, can be predicted using the formula below. Therefore, it is desirable to set the dry gas injection velocity toward the furnace inner wall so that Vs $\geq$ 0.8 m/s is satisfied. By satisfying Vs $\geq$ 0.8 m/s, the jet along the wall surface can be maintained, and the moisture concentration in the vicinity of the wall surface can be reduced.

$$Vs = 3.46 * V * \sqrt{((B/D)/2)}$$

Here, the faster Vs, which is the jet velocity impinging on the furnace inner wall, the larger the effect of removing moisture from the furnace wall becomes, but too high a flow rate of the fed dry gas may increase an internal pressure of the reducing furnace, thus causing a backflow toward the cooling zone. It is therefore necessary to adjust the internal pressure of the reducing furnace to be less than the internal pressure of the cooling zone. In a preferable example, Vs < 10 m/s.

Here, the supply nozzles 44A-44G (refer to FIG. 2) are preferably provided on a furnace top wall and all furnace sidewalls, except for a furnace hearth, because if they are provided on the furnace hearth, foreign matters may be rolled up. The temperature of the supplied dry gas may be lower than a furnace atmosphere temperature, where the furnace atmosphere temperature refers to the temperature of furnace atmosphere gas in the continuous annealing furnace. When the temperature of dry gas is lower than the furnace atmosphere temperature, it is difficult to maintain a jet along the wall surface at the furnace top portion due to the temperature difference with the atmosphere gas. Accordingly, the supply nozzles are preferably provided on the furnace top wall with a gap of 3 m to 5 m. For example, the gap between the supply nozzle 44C and the supply nozzle 44D of FIG. 2 may be 3 m to 5 m. The direction of injection may be upstream, downstream, or along the width direction of the steel sheet in the continuous annealing furnace. At the furnace side walls, gas is preferably injected downward from an upper portion of the reducing furnace, so as to take advantage of the descending nature of the low-temperature gas. Generally, the height of a continuous annealing furnace is approximately 20 m to 30 m, so it is preferable to provide supply nozzles on the furnace sidewalls with a gap of approximately 10 m in a height direction. For example, the gap between the supply nozzle 44A and the supply nozzle 44B of FIG. 2 may be approximately 10 m.

Mixed gas of N$_2$ and H$_2$ with a dew point of approximately -70 °C to -50 °C can be used as the dry gas, as is the case with dry gas in conventional technology.

The present inventors have also found that the release of moisture from the furnace wall and the heat insulation material is accelerated, by raising the temperature of the furnace inner wall of the continuous annealing furnace to a temperature at least 30 °C higher than the furnace atmosphere temperature. At this time, it is sufficient for the temperature of the furnace inner wall of the continuous annealing furnace to be at least 30 °C higher than, but no more than 50 °C higher than, the furnace atmosphere temperature.

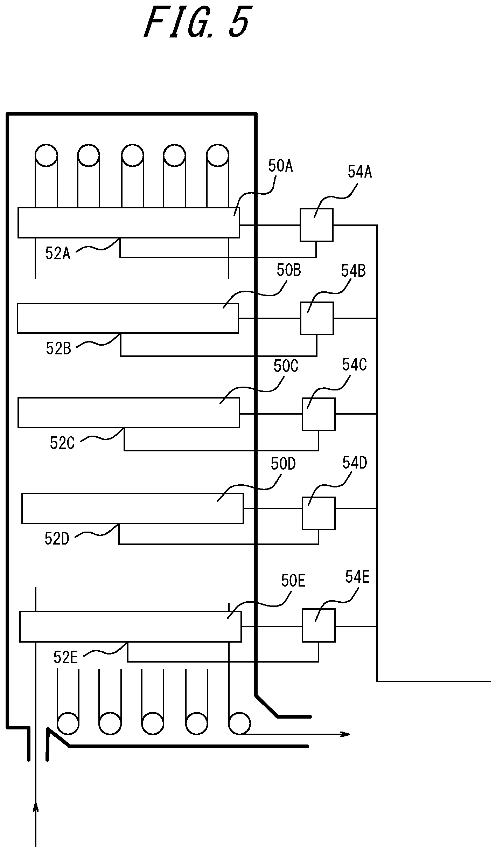

FIG. 5 illustrates examples of devices that heat and control the furnace inner wall of the reducing furnace. The reducing furnace includes heating elements 50A-50E, which are heating mechanisms that heat the furnace inner wall, thermometers 52A-52E, which each measure the temperature of the furnace inner wall, and controllers 54A-54E. The controllers 54A-54E control the amount of heating by the heating elements 50A-50E, based on the temperatures of the furnace inner wall measured by the thermometers 52A-52E. The amount of heating by the heating elements 50A-50E is adjusted, for example, by the controllers 54A-54E controlling the amount of current flowing through the heating elements 50A-50E. The furnace inner wall of the reducing furnace in actual operation is heated to 700 °C to 900 °C, for example, by radiant heat from the radiant tubes provided in the furnace. It is sufficient for the heating elements 50A-50E to have a heating capacity to raise the temperature in the furnace produced by the radiant heat from the radiant tubes by 30 °C to 50 °C. In this regard, it is known that raising the temperature of the furnace inner wall by more than 50 °C decreases the moisture removal effect. For this reason, the heating elements 50A-50E may have a heating capacity of 30 °C to 50 °C.

EXAMPLES

In a continuous hot-dip galvanizing line (CGL) that includes a continuous annealing furnace with a DFF-type heating furnace, heating burners of the DFF-type heating furnace were divided into four groups (Groups 1-4). As an oxidizing zone, heating burners belonging to three groups (Groups 1-3) were arranged on an upstream side in a steel sheet travelling direction of the continuous annealing surface. As a reducing zone, heating burners belonging to the remaining group (Group 4) were arranged on a downstream side in the steel sheet travelling direction of the oxidizing zone. The air ratios of the oxidizing zone and the reducing zone were individually controlled for tests. The length of each of the oxidizing zone and the reducing zone was 4 m.

A humidifying device with a hollow fiber membrane-type humidifying portion was used to humidify gas in the continuous annealing furnace. The humidified gas from the humidifying device was supplied directly into the continuous annealing furnace. A total of eight ordinary dry gas feed ports were provided as in FIG. 2. A total of nine humidified gas feed ports were provided as in FIG. 2. The hollow fiber membrane-type humidifying portion of the humidifying device included 10 membrane modules, each of which was configured to receive up to 500 liters/min of $N_2 + H_2$ mixed gas and up to 10 liters/min of circulating water. The $N_2 + H_2$ mixed gas was dry gas, wherein the composition was adjusted in advance to be fed into the continuous annealing furnace and wherein the dew point was constant at -50 °C. A common constant-temperature circulating water bath was used for the 10 membrane modules, and it was possible to supply a total of 100 liters/min of pure water.

First, a 90-minute sheet passing test was conducted using steel sample B of Table 1. Dry gas, which was used to lower a furnace dew point, was supplied from a total of nine supply nozzles, that is, the supply nozzles 44A-44G arranged at the positions illustrated in FIG. 2, and two additional supply nozzles arranged at two positions on furnace side walls. Each of these supply nozzles had a nozzle slit width of 4 [mm], a length (in the width direction of the steel sheet) of 2 m, an injection angle θ with respect to a furnace inner wall of 30°, and a distance D from the nozzle injection opening to the furnace inner wall that considers the injection angle of 80 mm. Furthermore, the dry gas was injected at a gas injection velocity of 2.35 m/s, where Vs, which was impinging jet velocity, was 1.29 m/s. At this time, the total flow rate of the dry gas into the furnace was approximately 600 $Nm^3$/hr.

[Table 1]

Table 1

| Steel ID | Chemical composition (mass%) | | | | | Target temperature in soaking zone | |
|---|---|---|---|---|---|---|---|
| | C | Si | Mn | Nb | Ti | Delivery temperature (°C) | Furnace dew point (°C) |
| A | 0.17 | 1.5 | 2.7 | 0.01 | 0.02 | 850 ± 15 | +10 to +15 |
| B | 0.19 | 1.0 | 3.1 | 001 | 0.02 | 830 ± 15 | +10 to +15 |
| C | 0.09 | 0.6 | 2.7 | 0.00 | 0.02 | 830 ± 15 | -15 to -5 |
| D | 0.09 | 0.45 | 1.7 | 0.04 | 0.08 | 800 ± 15 | -30 or less |

As a Comparative Example, using the apparatus described in PTL 2 (JP 2012-111995 A), dry gas was supplied through supply ports that opened perpendicularly with respect to the furnace inner wall, so as to change the furnace dew point, as is case with ordinary dry gas. Other conditions are presented in Table 2.

Table 2

| No | Steel ID | Sheet thickness (mm) | Sheet width (m) | Sheet passing speed (m/s) | Heating zone (DFF) | | | Soaking zone | | | | Cooling zone | Category |
|---|---|---|---|---|---|---|---|---|---|---|---|---|---|
| | | | | | Oxidizing burner air ratio | Reducing burner air ratio | Delivery temperature (°C) | Finish steel sheet temperature (°C) | Dry gas flow rate ($Nm^3/hr$) | Humidified gas flow rate ($Nm^3/hr$) | Dehumidifying method | Gas flow rate ($Nm^3/hr$) | |
| 1 | B | 1.4 | 1.2 | 2.0 | 1.10 | 0.85 | 682 | 831 | 150 → 600 | 400 → 0 | Refiner circulation | 460 | Comparative Example |
| 2 | B | 1.4 | 1.2 | 2.0 | 1.10 | 0.85 | 685 | 830 | 150 → 600 | 400 → 0 | Dry gas supply nozzles of present disclosure +30 °C furnace wall heating | 460 | Example |

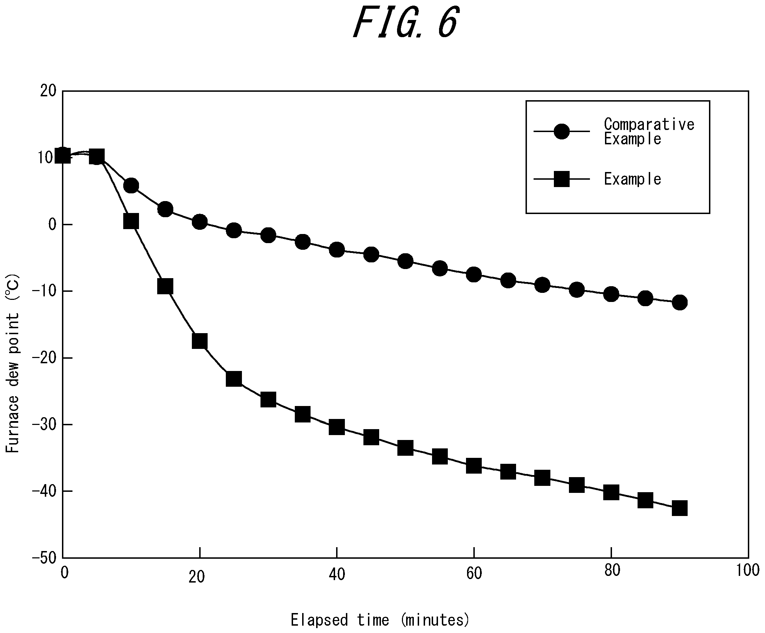

As illustrated in FIG. 6, the time required for the furnace dew point to be lowered to -20 °C or less was reduced to 20 minutes in the Example, whereas it was more than 90 minutes in the Comparative Example. Here, the furnace dew point was measured at the collection point 46 of FIG. 2 (which was not biased to the upstream side or the downstream side, and slightly closer to the top of the furnace in the height direction).

Next, tests were conducted in which a plurality of steel types with different target furnace dew points (refer to Table 1) were continuously passed through. For each steel type, the coil length was adjusted so that sheet passing time for the coil was approximately 20 minutes. Actual values of steel sheet temperature and furnace dew point were determined using average values over 500 m in the middle in the longitudinal direction of each coil.

As Comparative Examples, the apparatuses described in PTL 2 (JP 2012-111995 A) and PTL 3 (JP 2016-125131 A) were used.

Other manufacturing conditions are presented in Table 3 and Table 4. The temperature of molten bath was 460 °C. The Al concentration in the molten bath was 0.130 %. The coating weight was adjusted to 45 g/m$^2$ per surface by gas wiping. After hot-dip galvanizing, alloying treatment was performed in an induction heating-type alloying furnace, wherein an alloying temperature was set so that the coating alloying degree (Fe content) was within 10 % to 13 %.

[Table 3]

Table 3

| No | Steel ID | Sheet thickness (mm) | Sheet width (m) | Sheet passing speed (m/s) | Heating zone (DFF) Oxidizing burner air ratio | Heating zone (DFF) Reducing burner air ratio | Heating zone (DFF) Delivery temperature (°C) | Furnace dew point (°C) | Finish steel sheet temperature (°C) | Soaking zone Dry gas flow rate (Nm³/hr) | Soaking zone Humidified gas flow rate (Nm³/hr) | Soaking zone Humidified gas dew point (°C) | Soaking zone Dehumidifying method | Cooling zone Gas flow rate (Nm³/hr) | Alloying treatment Alloying temperature (°C) | Surface appearance | Material properties Tensile strength (MPa) | Material properties Bendability R/t | Overall evaluation Pass/fail | Category |
|---|---|---|---|---|---|---|---|---|---|---|---|---|---|---|---|---|---|---|---|---|
| 1 | A | 1.4 | 1.2 | 1.5 | 1.10 | 0.85 | 703 | 11.2 | 845 | 150 | 400 | 40 | - | 460 | 505 | VG | 1201 | 2.5 | Pass | Comparative Example PTL 2 |
|  | B | 1.4 | 1.2 | 1.5 | 1.10 | 0.85 | 682 | 12.1 | 831 | 150 | 400 | 38 | - | 460 | 510 | VG | 1502 | 3.2 | Pass |  |
|  | C | 1.4 | 1.0 | 1.5 | 1.10 | 0.85 | 685 | 5.3 | 830 | 550 | 0 | - | - | 460 | 492 | VB | 1010 | 1.4 | Fail |  |
|  | D | 0.8 | 1.5 | 1.5 | 0.95 | 0.85 | 631 | 0.8 | 795 | 550 | 0 | - | Refiner circulation | 460 | 523 | VB | 625 | 0.1 | Fail |  |
| 2 | A | 1.4 | 1.2 | 1.5 | 1.10 | 0.85 | 699 | 10.5 | 848 | 150 | 400 | 40 | - | 460 | 503 | VG | 1195 | 2.7 | Pass | Comparative Example PTL 2 |
|  | B | 1.4 | 1.2 | 1.5 | 1.10 | 0.85 | 680 | 11.3 | 830 | 150 | 400 | 38 | - | 460 | 508 | VG | 1495 | 3.3 | Pass |  |
|  | C | 1.4 | 1.0 | 1.5 | 1.10 | 0.85 | 683 | 0.5 | 832 | 550 | 0 | - | - | 460 | 493 | VB | 1005 | 1.2 | Fail |  |
|  | D | 0.8 | 1.5 | 1.5 | 0.95 | 0.85 | 630 | -3.5 | 803 | 550 | 0 | - | Refiner circulation | 460 | 520 | B | 612 | 0.1 | Fail |  |
| 3 | A | 1.4 | 1.2 | 1.5 | 1.10 | 0.85 | 700 | 11.5 | 852 | 150 | 400 | 40 | - | 460 | 510 | VG | 1198 | 2.4 | Pass | Comparative Example PTL 3 |
|  | B | 1.4 | 1.2 | 1.5 | 1.10 | 0.85 | 680 | 10.6 | 830 | 150 | 400 | 38 | - | 460 | 503 | VG | 1498 | 3.4 | Pass |  |
|  | C | 1.4 | 1.0 | 1.5 | 1.10 | 0.85 | 686 | -3.8 | 831 | 660 | 0 | - | Supplying dry gas to vicinity of roll | 350 | 511 | B | 1007 | 1.2 | Fail |  |
|  | D | 0.8 | 1.5 | 1.5 | 0.95 | 0.85 | 632 | -8.1 | 802 | 660 | 0 | - | - | 350 | 515 | B | 618 | 0.1 | Fail |  |
| 4 | A | 1.4 | 1.2 | 1.5 | 1.10 | 0.85 | 705 | 11.1 | 849 | 150 | 400 | 40 | - | 460 | 515 | VG | 1207 | 2.4 | Pass | Example |
|  | B | 1.4 | 1.2 | 1.5 | 1.10 | 0.85 | 681 | 11.9 | 831 | 150 | 400 | 38 | - | 460 | 505 | VG | 1505 | 3.2 | Pass |  |
|  | C | 1.4 | 1.0 | 1.5 | 1.10 | 0.85 | 685 | -5.6 | 831 | 660 | 150 | 35 | Dry gas supply nozzles of present disclosure | 350 | 508 | G | 1004 | 1.5 | Pass |  |
|  | D | 0.8 | 1.5 | 1.5 | 0.95 | 0.85 | 634 | -31.3 | 800 | 660 | 0 | - | - | 350 | 522 | G | 610 | 0.1 | Pass |  |

[Table 4]

Table 4

| No | Steel ID | Sheet thickness (mm) | Sheet width (m) | Sheet passing speed (m/s) | Heating zone (DFF) | | | Soaking zone | | | | | | Cooling zone | Alloying treatment | Surface appearance | Material properties | | Overall evaluation | Category |
|---|---|---|---|---|---|---|---|---|---|---|---|---|---|---|---|---|---|---|---|---|
| | | | | | Oxidizing burner air ratio | Reducing burner air ratio | Delivery temperature (°C) | Furnace dew point (°C) | Finish steel sheet temperature (°C) | Dry gas flow rate (Nm³/hr) | Humidified gas flow rate (Nm³/hr) | Humidified gas dew point (°C) | Dehumidifying method | Gas flow rate (Nm³/hr) | Alloying temperature (°C) | | Tensile strength (MPa) | Bendability R/t | Pass/fail | |
| 5 | A | 1.4 | 1.2 | 1.5 | 1.10 | 0.85 | 701 | 12.0 | 853 | 150 | 400 | 40 | - | 460 | 507 | VG | 1202 | 2.2 | Pass | Example |
| | B | 1.4 | 1.2 | 1.5 | 1.10 | 0.85 | 682 | 12.5 | 829 | 150 | 400 | 38 | - | 460 | 505 | VG | 1503 | 3.4 | Pass | |
| | C | 1.4 | 1.0 | 1.5 | 1.10 | 0.85 | 683 | -10.3 | 832 | 510 | 150 | 35 | Dry gas supply nozzles of present disclosure +15 °C furnace wall heating | 350 | 515 | G | 1010 | 1.3 | Pass | |
| | D | 0.8 | 1.5 | 1.5 | 0.95 | 0.85 | 629 | -35.7 | 799 | 660 | 0 | - | | 350 | 520 | G | 615 | 0.1 | Pass | |
| 6 | A | 1.4 | 1.2 | 1.5 | 1.10 | 0.85 | 698 | 12.0 | 853 | 150 | 400 | 40 | - | 460 | 510 | VG | 1195 | 2.2 | Pass | Example |
| | B | 1.4 | 1.2 | 1.5 | 1.10 | 0.85 | 680 | 12.5 | 829 | 150 | 400 | 38 | - | 460 | 505 | VG | 1498 | 3.1 | Pass | |
| | C | 1.4 | 1.0 | 1.5 | 1.10 | 0.85 | 683 | -11.4 | 832 | 510 | 150 | 35 | Dry gas supply nozzles of present disclosure +30 °C furnace wall heating | 350 | 515 | VG | 1011 | 1.5 | Pass | |
| | D | 0.8 | 1.5 | 1.5 | 0.95 | 0.85 | 632 | -38.2 | 799 | 660 | 0 | - | | 350 | 518 | VG | 610 | 0.1 | Pass | |
| 7 | A | 1.4 | 1.2 | 1.5 | 1.10 | 0.85 | 705 | 12.0 | 853 | 150 | 400 | 40 | - | 460 | 509 | VG | 1198 | 2.1 | Pass | Example |
| | B | 1.4 | 1.2 | 1.5 | 1.10 | 0.85 | 680 | 12.5 | 829 | 150 | 400 | 38 | - | 460 | 505 | VG | 1505 | 3.1 | Pass | |
| | C | 1.4 | 1.0 | 1.5 | 1.10 | 0.85 | 684 | -10.1 | 832 | 510 | 150 | 35 | Dry gas supply nozzles of present disclosure +45 °C furnace wall heating | 350 | 515 | VG | 1007 | 1.5 | Pass | |
| | D | 0.8 | 1.5 | 1.5 | 0.95 | 0.85 | 631 | -38.2 | 799 | 660 | 0 | - | | 350 | 518 | VG | 607 | 0.1 | Pass | |
| 8 | A | 1.4 | 1.2 | 1.5 | 1.10 | 0.85 | 700 | -40.2 | 850 | 550 | 0 | - | - | 460 | 570 | VB | 1130 | 5.3 | Fail | Comparative Example |
| | B | 1.4 | 1.2 | 1.5 | 1.10 | 0.85 | 685 | -42.5 | 827 | 550 | 0 | - | - | 460 | 556 | VB | 1452 | 6.5 | Fail | |
| | C | 1.4 | 1.0 | 1.5 | 1.10 | 0.85 | 685 | -35.2 | 827 | 550 | 0 | - | - | 460 | 561 | VB | 960 | 1.3 | Fail | |
| | D | 0.8 | 1.5 | 1.5 | 0.95 | 0.85 | 630 | -34.3 | 803 | 550 | 0 | - | - | 460 | 530 | G | 600 | 0.1 | Pass | |

12

Surface appearance was evaluated by inspection with an optical surface defect meter (by detecting the presence of non-coating defects and pick-up defects). Over the entire length of a coil, a defect occurrence rate of 0.1 % or less was defined as VG, 0.1 % to 1.0 % was defined as G, 1.0 % to 5.0 % was defined as B, and 5.0 % or more was defined as VB. To pass the overall evaluation, the surface appearance needed to be evaluated as VG or G.

Material strength (tensile strength) was measured and evaluated. To pass the overall evaluation, the material strength needed to be greater than or equal to a reference value. The reference value for steel sample A was 1180 MPa, that for steel sample B was 1470 MPa, that for steel sample C was 980 MPa, and that for steel sample D was 590 MPa.

For bendability, a strip-shaped test piece with a width of 30 mm and a length of 100 mm was collected, and a bend test was performed in a manner such that a direction parallel to the rolling direction served as a bending axis direction for the test. A 90° V-bending test was performed under a set of conditions including a stroke speed of 50 mm/s, a pressing load of 10 tons, and a press-holding time of 5 seconds. A ridge portion at the apex of the bend was observed using a magnifier with 10 times magnification, and the minimum bending radius at which no cracks with a crack length of 0.5 mm or more were observed was determined. The ratio (R/t) of the minimum bending radius R to the sheet thickness t was calculated, and the bendability was evaluated based on the ratio (R/t). To pass the overall evaluation, the ratio (R/t) needed to be smaller than or equal to a reference value. The reference value for steel sample A was 3.5, that for steel sample B was 5.0, that for steel sample C was 1.5, and that for steel sample D was 0.5.

The overall evaluation was "pass," when all the conditions for surface appearance, material strength, and bendability were satisfied. Comparative Example No. 1 and Comparative Example No. 2, in which the apparatus described in PLT 2 was used, and Comparative Example No. 3, in which the apparatus described in PLT 3 was used, ultimately failed. These Comparative Examples passed while steel sample A and steel sample B were being passed through, but they failed while steel sample C and steel sample D were being passed though because the furnace dew point was not lowered, thus resulting in pickup defects, non-coating defects, or the like. Comparative Example No. 8, in which the furnace was not humidified (humidified gas was not supplied into the furnace at any time, not only when the furnace dew point was lowered), failed because the material properties were not satisfied for steel sample A through C. On the other hand, surface quality and material properties were satisfied for all steel types in Examples No.4 through No.7, and the overall evaluations were "pass."

As described above, with the above configurations and steps, the dew point control method for a continuous annealing furnace, the continuous annealing method for a steel sheet, the steel sheet manufacturing method, the continuous annealing furnace, the continuous hot-dip galvanizing line, and the galvannealing line according to the present embodiment can control the furnace dew point in a short time. Furthermore, as is clear from comparison between the Examples and the Comparative Examples in Table 3 and Table 4, according to the present disclosure, high-tensile-strength steel sheets containing various components can be produced without loss of productivity.

REFERENCE SIGNS LIST

| | |
|---|---|
| 10 | Heating zone |
| 10A | Preheating zone |
| 10B | Direct-fired furnace |
| 12 | Soaking zone |
| 14 | Rapid cooling zone |
| 16 | Slow cooling zone |
| 18 | Snout |
| 20 | Continuous annealing furnace |
| 22 | Coating apparatus |
| 23 | Alloying furnace |
| 24 | Gas distribution device |
| 26 | Humidifying device |
| 28 | Constant-temperature circulating water bath |
| 36A-36C | Humidified gas feed port |
| 38A-38C | Humidified gas feed port |
| 40A-40C | Humidified gas feed port |
| 42 | Ordinary gas supply port |
| 42A-42H | Ordinary dry gas feed port |
| 44A-44G | Supply nozzle |
| 46 | Collection point |
| 50A-50E | Heating element |

| 52A-52E | Thermometer |
| 54A-54E | Controller |
| 100 | Continuous hot-dip galvanizing line |

**Claims**

1. A dew point control method for a continuous annealing furnace, the method comprising
   stopping or reducing supply of humidified gas into the furnace, and supplying dry gas along a furnace inner wall of the continuous annealing furnace in the continuous annealing furnace.

2. The dew point control method according to claim 1, wherein a temperature of the furnace inner wall of the continuous annealing furnace is at least 30 °C higher than a furnace atmosphere temperature in the continuous annealing furnace.

3. The dew point control method according to claim 1 or 2, wherein a furnace dew point is changed from a dew point of 5 °C or more to a dew point of less than 0 °C.

4. The dew point control method according to any one of claims 1 to 3, wherein

   an angle formed between the dry gas injected from inside the furnace toward the furnace inner wall and the furnace inner wall in the continuous annealing furnace is 5° or more and 45° or less, and
   a jet velocity of the dry gas impinging on the furnace inner wall is controlled to be 0.8 m/s or more.

5. A continuous annealing method for a steel sheet, the method comprising
   controlling a furnace dew point using the dew point control method according to any one of claims 1 to 4.

6. A steel sheet manufacturing method comprising
   manufacturing a high-tensile-strength steel sheet, a hot-dip galvanized steel sheet, or a galvannealed steel sheet using the continuous annealing method according to claim 5.

7. A continuous annealing furnace comprising
   a nozzle configured to supply gas along a furnace inner wall, wherein the gas supplied from the nozzle includes dry gas.

8. The continuous annealing furnace according to claim 7, wherein

   the nozzle configured to inject the gas is provided on a furnace top wall and/or a furnace side wall in the furnace, and
   an angle formed between the gas injected from the nozzle toward the furnace inner wall and the furnace inner wall is 5° or more and 45° or less.

9. The continuous annealing furnace according to claim 7 or 8, comprising
   a heating mechanism configured to heat the furnace inner wall to a temperature at least 30 °C higher than a furnace atmosphere temperature.

10. A continuous hot-dip galvanizing line comprising:

    the continuous annealing furnace according to any one of claims 7 to 9; and
    a coating apparatus that follows the continuous annealing furnace.

11. A galvannealing line comprising:

    the continuous annealing furnace according to any one of claims 7 to 9;
    a coating apparatus that follows the continuous annealing furnace; and
    an alloying furnace.

FIG. 1

# FIG. 2

# FIG. 3

Outside of furnace

Inside of furnace

42

Furnace wall

EP 4 310 207 A1

# FIG. 4

Outside of furnace

Furnace wall

Inside of furnace

θ

V

D

44C

# FIG. 5

*FIG. 6*

| | INTERNATIONAL SEARCH REPORT | International application No. |
|---|---|---|
| | | **PCT/JP2022/004973** |

**A.    CLASSIFICATION OF SUBJECT MATTER**

*C21D 9/56*(2006.01)i; *C21D 1/74*(2006.01)i; *C21D 1/76*(2006.01)i
FI:    C21D9/56 101C; C21D1/74 H; C21D1/76 L

According to International Patent Classification (IPC) or to both national classification and IPC

**B.    FIELDS SEARCHED**

Minimum documentation searched (classification system followed by classification symbols)

C21D9/52-9/66; C21D1/74-1/773; F27B9/00-9/40; C23C2/00-2/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2020-520408 A (STAN, Fib) 09 July 2020 (2020-07-09) claims, paragraphs [0024]-[0028], [0054]-[0058], fig. 2 | 1, 5-7, 10-11 |
| Y | | 2-4, 8-9 |
| Y | JP 61-253327 A (SUMITOMO METAL INDUSTRIES, LTD.) 11 November 1986 (1986-11-11) p. 1, lower left column, line 14 to lower right column, line 6 | 2-4, 8-9 |
| A | JP 2012-111995 A (JFE STEEL CORP.) 14 June 2012 (2012-06-14) | 1-11 |
| A | JP 7-62450 A (NIPPON STEEL CORP.) 07 March 1995 (1995-03-07) | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 March 2022** | **29 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

| | | | International application No. |
| | | | **PCT/JP2022/004973** |

| Patent document<br>cited in search report | Publication date<br>(day/month/year) | Patent family member(s) | Publication date<br>(day/month/year) |
|---|---|---|---|
| JP 2020-520408 A | 09 July 2020 | US 2020/0095652 A1<br>claims, paragraphs [0025]-[002<br>9], [0056]-[0060], fig. 2<br>WO 2018/172714 A1<br>EP 3601624 A0<br>FR 3064278 A1<br>KR 10-2019-0130611 A<br>CN 110582586 A | |
| JP 61-253327 A | 11 November 1986 | (Family: none) | |
| JP 2012-111995 A | 14 June 2012 | (Family: none) | |
| JP 7-62450 A | 07 March 1995 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019187060 A1
- JP 2012111995 A
- JP 2016125131 A